# EUROPÄISCHE PATENTANMELDUNG

(11) **EP 2 979 826 A1**
(43) Veröffentlichungstag der Anmeldung: **03.02.2016**
(21) Anmeldenummer: 15174869.6
(22) Anmeldetag: 01.07.2015
(51) Int. Cl.: B25J 15/06, B26D 7/01, B66C 1/02, B65G 47/91

(54) **FLÄCHENSAUGGREIFER**

(30) Priorität: 31.07.2014 DE 102014215102
(71) Anmelder: J. Schmalz GmbH, 72293 Glatten (DE)
(72) Erfinder: Dr. Harald Kuolt, 78586 Deilingen (DE); Boev, Waldemar, 72296 Schopfloch (DE)
(74) Vertreter: DREISS Patentanwälte PartG mbB

(57) **Zusammenfassung**

Die Erfindung betrifft einen Flächensauggreifer, mit einem Gehäuse in welchem eine Unterdruckkammer vorgesehen ist, wobei das Gehäuse eine dem Werkstück zugewandten Saugseite aufweist, an welcher wenigstens eine Saugstelle mit wenigstens einer Saugöffnung vorgesehen ist. Es ist in der Unterdruckkammer wenigstens ein der Saugstelle zugeordneter, einen Dichtabschnitt aufweisender und verformbar ausgebildeter Verschlusskörper vorgesehen, wobei der Verschlusskörper einen Deformationsabschnitt mit einer Deformationskammer aufweist, wobei Verschlusskörper durch Beaufschlagen der Deformationskammer mit einer Druckdifferenz von einer Durchlasskonfiguration in eine Schließkonfiguration derart verformbar ist, dass der Dichtabschnitt in der Schließkonfiguration wenigstens eine Saugöffnung der Saugstelle verschließt und diese in der Durchlasskonfiguration freigibt.

## Beschreibung

Die Erfindung betrifft einen Flächensauggreifer nach dem Oberbegriff des Anspruchs 1.

Solche Flächensauggreifer finden beispielsweise zur Handhabung von biegeschlaffen, flächigen Materialien wie Textilien, Faserverbundmaterialien, Folien, Leder o.ä., jedoch auch von flächigen festen Werkstoffen wie Blechen Verwendung. Bei der Verarbeitung solcher lagenartiger Materialien werden diese beispielsweise nach Zuschnittsmustern in Formen geschnitten. Die zugeschnittenen Teile sollen dann selektiv und kontrolliert gegriffen werden, ohne umliegende Teile oder Teile des von den zugeschnittenen Teilen abgetrennten Restgitters mit aufzunehmen.

Insbesondere bei kleinteiligen oder komplexen Formen erfolgt das selektive Aufnehmen des Werkstückes oftmals noch manuell. Um ein automatisiertes aufnehmen ausgewählter Teile mit einem Flächensauggreifer zu ermöglichen, ist es bekannt, einzelne der in der Saugfläche vorhandenen Saugstellen aktivierbar und deaktivierbar auszubilden, wie dies beispielsweise in der EP 1 254 854 A1 angesprochen ist. Entsprechend ausgestaltete Flächensauggreifer mit einzeln aktivierbaren und deaktivierbaren Saugstellen sind jedoch oftmals aufwendig konstruiert und in ihrer Herstellung teuer.

Die Aufgabe der vorliegenden Erfindung besteht darin, einen robust arbeitenden und zuverlässig und kostengünstig herstellbaren Flächensauggreifer zur Handhabung von flächigen Werkstücken bereitzustellen, mit welchem insbesondere selektiv Teile unterschiedlicher Formen gegriffen werden können, ohne umliegende Teile oder Teile des Restgitters mit aufzunehmen.

Diese Aufgabe wird durch einen Flächensauggreifer zum Ansaugen und Handhaben von insbesondere flächigen, schichtartigen oder plattenartigen Werkstücken gemäß Anspruch 1 gelöst. Der Flächensauggreifer weist ein Gehäuse mit einer mit Unterdruck beaufschlagbaren Unterdruckkammer auf. Das Gehäuse hat eine im bestimmungsgemäßen Betrieb dem Werkstück zugewandte Saugseite, an welcher wenigstens eine Saugstelle mit wenigstens einer Saugöffnung vorgesehen ist, durch welche das Werkstück mittels des in der Unterdruckkammer herrschenden Unterdrucks ansaugbar ist.

Erfindungsgemäß ist in der Unterdruckkammer wenigstens ein der jeweiligen Saugstelle zugeordneter, einen Dichtabschnitt aufweisender und verformbar ausgebildeter Verschlusskörper angeordnet. Der Verschlusskörper ist zwischen einer Schließkonfiguration und einer Dichtkonfiguration verformbar ausgebildet, wobei der Dichtabschnitt bei Vorliegen der Schließkonfiguration wenigstens eine Saugöffnung der zugeordneten Saugstelle gegen Durchströmen von Luft in die Unterdruckkammer verschließt, jedoch die Saugöffnung bei Vorliegen der Durchlasskonfiguration freigibt. Hierzu weist der Verschlusskörper einen Deformationsabschnitt auf, welcher mit einer Deformationskammer versehen ist, an welche eine Druckdifferenz anlegbar ist. Die Deformationskammer ist insofern mit einem Differenzdruck (Überdruck oder Unterdruck), insbesondere gegenüber der Unterdruckkammer, beaufschlagbar. Durch Beaufschlagen der Deformationskammer mit der Druckdifferenz kann der Verschlusskörper von seiner Durchlasskonfiguration in die Schließkonfiguration (oder umgekehrt) verformt werden.

Mit diesem Flächensauggreifer können auch nicht vollständig dichtend an der Saugseite anliegende oder teilweise luftdurchlässige Werkstücke (z.B. Textilien) in zuverlässiger Weise gegriffen werden, da durch die global mit Unterdruck beaufschlagte Unterdruckkammer ein ausreichender Volumenstrom zum Ansaugen durch die Saugöffnungen bereitgestellt werden kann. Durch kontrolliertes Abschalten von bestimmten Saugstellen kann die Saugwirkung für bestimmte Bereiche in der Saugseite deaktiviert werden. Dadurch kann ein Werkstück mit einer gewünschten Umfangskontur gezielt gegriffen werden, ohne umliegende Teile in unerwünschter Weise mit aufzunehmen. Dies wird auf konstruktiv einfache Weise durch die in der Unterdruckkammer vorgesehenen, den jeweiligen Saugstellen zugeordneten und kontrolliert verformbaren Verschlusskörper realisiert.

An seiner Saugseite weist das Gehäuse vorzugsweise eine Saugfläche auf, welche insbesondere eben ausgebildet ist. Die Saugfläche kann zur Handhabung des flächigen Werkstückes an dieses angelegt werden. Die Saugöffnungen sind als die Saugfläche zur Unterdruckkammer hin durchsetzende Öffnungen, beispielsweise Bohrungen, ausgebildet.

Der verformbare Verschlusskörper nimmt vorzugsweise ohne Beaufschlagung der Deformationskammer mit Druckluft seine Durchlasskonfiguration ein. Insbesondere ist der Verschlusskörper derart ausgebildet, dass er in seiner Durchlasskonfiguration vorgespannt ist, d.h. gegen eine Verformung in die Schließkonfiguration vorgespannt ist. Denkbar ist auch, dass bei Beaufschlagung der Deformationskammer mit einem Unterdruck die Durchlasskonfiguration eingenommen wird. Insbesondere kann der Verschlusskörper dann in der Schließkonfiguration vorgespannt sein, z.B. derart, dass er nur bei Anlegen des Unterdrucks öffnet.

Dies kann auf einfache Weise dadurch realisiert werden, dass zumindest der Deformationsabschnitt des Verschlusskörpers aus einem elastisch verformbaren Material, insbesondere Kunststoff, vorzugsweise ein Elastomer, ausgebildet ist. Denkbar ist jedoch auch, dass der gesamte Verschlusskörper aus dem elastisch verformbaren Material geformt ist. Dies ermöglicht eine kostengünstige Herstellung des Verschlusskörpers als einfaches Kunststoffteil.

Denkbar ist auch, dass an dem Verschlusskörper eine Dichtplatte zum Verschließen wenigstens einer Saugöffnung der jeweils zugeordneten Saugstelle vorgesehen ist.

Insofern bildet die Dichtplatte den Dichtabschnitt. Die Dichtplatte kann aus einem anderen Material als der Deformationsabschnitt ausgebildet sein. Insbesondere kann die Dichtplatte an die Form der der Unterdruckkammer zugewandten Innenfläche der Saugseite angepasst ausgebildet sein. Mit der Dichtplatte können in Schließkonfiguration mehrere Saugöffnungen einer Saugstelle überdeckt werden.

Vorzugsweise weist die Saugseite eine Vielzahl von Saugstellen mit jeweils wenigstens einer Saugöffnung und mit jeweils einem zugeordneten Verschlusskörper auf. Jede Saugseite kann wiederum eine Vielzahl von Saugöffnungen umfassen. Dies ermöglicht es, über die Saugseite eine gleichmäßige Saugkraft bereitzustellen, so dass beispielsweise bei der Handhabung von Stofflagen oder Folien ein lokales Einsaugen und/oder Verknittern vermieden werden kann.

Der Dichtabschnitt des der Saugstelle zugeordneten Verschlusskörpers kann derart ausgebildet sein, dass in der Schließkonfiguration sämtliche Saugöffnungen oder nur eine Auswahl der Saugöffnungen der jeweiligen Saugstelle verschlossen sind.

Die Saugöffnungen können gruppiert oder matrixartig angeordnet sein. Denkbar ist jedoch auch, dass die Saugöffnungen gleichmäßig an der Saugseite verteilt angeordnet sind, z.B. arrayartig oder schachbrettartig. Dabei sind im vorliegenden Zusammenhang einer Saugstelle jeweils diejenigen Saugöffnungen zugeordnet, welche bei Vorliegen der Schließkonfiguration von dem Dichtabschnitt des jeweils zugeordneten Verschlusskörpers verschlossen sind.

Um die Verformung des Verschlusskörpers zwischen Schließkonfiguration und Durchlasskonfiguration kontrolliert herbeizuführen, kann die Deformationskammer in dem Deformationsabschnitt innenliegend vorgesehen sein. Vorzugsweise ist der Deformationsabschnitt derart ausgebildet, dass die Deformationskammer ballonartig aufblähbar ist. Denkbar sind jedoch auch andere Ausgestaltungen, beispielsweise dass der Deformationsabschnitt zumindest einen außen liegenden Schwellkörper mit zumindest einer Deformationskammer aufweist. Denkbar ist auch eine Ausgestaltung mit einer Rollmembran, die z.B. die Deformationskammer begrenzt.

Nach einer vorteilhaften Ausgestaltung ist der Deformationsabschnitt faltenbalgartig ausgebildet. Vorzugsweise bildet der Faltenbalg eine Wandung der Deformationskammer. Dadurch kann durch Beaufschlagen der Deformationskammer eine große Hubbewegung des Dichtabschnittes in eine definierte Expansionsrichtung erzeugt werden.

Wenn mehrere Verschlusskörper vorgesehen sind, so können diese zusammenhängend, z.B. an einem Membrantuch, angeordnet sein. Dadurch kann eine zuverlässige Abdichtung der Unterdruckkammer erreicht werden, z.B. gegenüber einer Vorsteuerventilseite oder der Umgebung.

Der Verschlusskörper ist vorzugsweise mit einem Mündungsabschnitt an einem Befestigungsabschnitt des Gehäuses fixiert. Der Befestigungsabschnitt liegt vorzugsweise der Saugseite gegenüber am Gehäuse. Durch Beaufschlagung der Deformationskammer expandiert der Verschlusskörper dann in Richtung zu der zugeordneten Saugstelle hin und verschließt dort die Saugöffnungen mit seinem Dichtabschnitt.

Der Mündungsabschnitt des Verschlusskörpers ist vorzugsweise durch eine entsprechende Öffnung in der Unterdruckkammer aus der Unterdruckkammer hinaus durch eine Gehäusewandung des Gehäuses durchgeführt. An dem außen liegenden Teil des Mündungsabschnitts ist vorzugsweise ein Druckluftzugang vorgesehen, durch welchen der Deformationskammer Druckluft zugeführt werden kann. Denkbar ist auch, dass statt des Druckluftzugangs ein entsprechender Unterdruckzugang zur Beaufschlagung der Deformationskammer mit Unterdruck vorgesehen ist.

Grundsätzlich ist die Unterdruckkammer mit einer Unterdruckversorgung verbindbar. Hierzu kann das Gehäuse wenigstens einen Unterdruckversorgungszugang aufweisen, über welchen die Unterdruckkammer evakuiert werden kann. In der Unterdruckkammer wird dadurch ein globaler Unterdruck bereitgestellt, so dass durch die von dem Verschlusskörper freigegebenen Saugöffnungen kontrolliert angesaugt werden kann.

Die Deformationskammer des in der Unterdruckkammer angeordneten Verschlusskörpers ist demgegenüber mit der Druckdifferenz (d.h. mit Überdruck oder Unterdruck) beaufschlagbar. Hierzu weist der Verschlusskörper vorzugsweise den genannten Druckluftzugang bzw. Unterdruckzugang auf.

Die Zufuhr von Überdruck oder Unterdruck bzw. die Zufuhr von Druckluft oder das Absaugen von Luft zu der Deformationskammer kann mit Vorsteuerventilen geregelt werden. Hierzu ist vorzugsweise für jeden Verschlusskörper ein jeweils individuell zugeordnetes Vorsteuerventil zur kontrollierbaren Beaufschlagung der Deformationskammer mit einer Druckdifferenz vorgesehen. Die Vorsteuerventile sind insbesondere individuell ansteuerbar. Hierzu kann der Flächensauggreifer eine Steuereinrichtung aufweisen. Die einzelnen Vorsteuerventile sind beispielsweise einzeln mit der Steuereinrichtung verbunden. Die Vorsteuerventile können außerdem Kommunikationsschnittstellen zur Übertragung von Steuersignalen aufweisen, insbesondere BUS-Schnittstellen oder IO-Link-Schnittstellen.

Die Vorsteuerventile und die Verschlusskörper können zu einer Baueinheit zusammengefasst sein. Nach einer konstruktiv vorteilhaften Ausgestaltung können alle Vorsteuerventile in einer gemeinsamen Versorgungskammer für den Überdruck oder Unterdruck münden, so dass diese Versorgungskammer über die Vorsteuerventile kontrolliert mit den Deformationskammern verbindbar ist.

Die Vorsteuerventile und ggf. die Steuereinrichtung können auch z.B. zu einer Ventileinheit modular zusammengefasst sein, welche beispielsweise an das Gehäuse anordenbar und dort befestigbar ist. Für eine Mehrzahl von Verschlusskörpern können in der Ventileinheit jeweils zugeordnete Vorsteuerventile vorgesehen sein. Ein so modular aufgebauter Flächensauggreifer kann komfortabel gewartet und an verschiedene Einsatzzwecke angepasst werden. Denkbar ist jedoch auch, dass die Vorsteuerventile integriert in den Flächensauggreifer, beispielsweise in das Gehäuse integriert, angeordnet sind.

Zur weiteren Ausgestaltung kann der Flächensauggreifer einen Unterdruckerzeuger zur Evakuierung der Unterdruckkammer umfassen. Der Unterdruckerzeuger ist insbesondere als druckluftbetriebener Ejektor ausgebildet. Bei dieser Ausgestaltung ist sowohl die Evakuierung der Unterdruckkammer, als auch der kontrollierte Verschluss oder die kontrollierte Freigabe der Saugstellen druckluftgesteuert. Denkbar ist jedoch auch, dass ein elektrischer Unterdruckerzeuger Verwendung findet.

Der Unterdruckerzeuger kann als Unterdruckerzeugermodul ausgestaltet sein. Der Unterdruckerzeuger ist insbesondere an das Gehäuse und/oder an die oben genannte Ventileinheit andockbar. Der Unterdruckerzeuger kann jedoch auch in das Gehäuse des Flächensauggreifers integriert sein.

Grundsätzlich bildet der Verschlusskörper mit der zugeordneten Saugstelle und dem Dichtabschnitt als Ganzes betrachtet ein Ventil, mit welchem die Saugöffnungen zur Unterdruckkammer hin kontrolliert verschließbar und freigebbar sind, und welches ggf. mittels des Vorsteuerventils ansteuerbar ist.

Die Erfindung wird im Folgenden anhand der Figuren näher beschrieben. Es zeigen:
Figur 1 schematische Darstellung eines erfindungsgemäßen Flächensauggreifers mit zwei Saugstellen;
Figur 2 schematische Darstellung der Unterdruckkammer eines erfindungsgemäßen Flächensauggreifers mit Verschlusskörpern;
Figur 3 schematische Darstellung mit Vorsteuerventilen;
Figur 4 Gesamtansicht eines Flächensauggreifers.

In der nachfolgenden Beschreibung sind für identische oder einander entsprechende Merkmale jeweils dieselben Bezugszeichen verwendet.

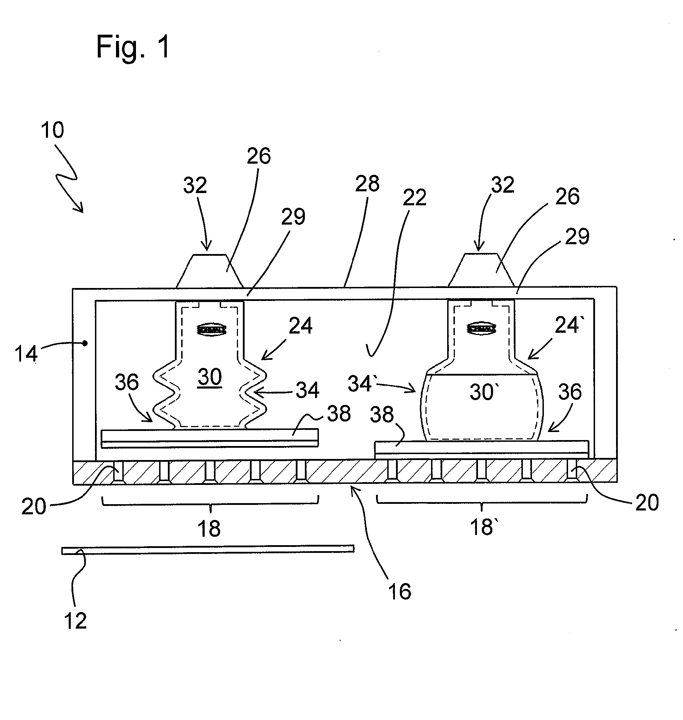

Die Figur 1 zeigt in skizzierter Darstellung einen Flächensauggreifer 10 zur Handhabung eines flächigen, beispielsweise plattenartigen, Werkstückes 12. Der Flächensauggreifer 10 hat ein Gehäuse 14 mit einer Saugseite 16, die im Betrieb des Flächensauggreifers 10 dem Werkstück 12 zugewandt ist und an welche das Werkstück 12 ansaugbar ist. Hierzu weist die Saugseite 16 im dargestellten Beispiel zwei Saugstellen 18, 18' auf. Jede Saugstelle 18, 18' umfasst mehrere Saugöffnungen 20, welche das Gehäuse 14 an der Saugseite 16 von außen nach innen zu einer in dem Gehäuse 14 vorgesehenen Unterdruckkammer 22 hin durchsetzen. Die Unterdruckkammer 22 ist evakuierbar und weist hierzu einen entsprechenden Unterdruckversorgungszugang auf, der nachfolgend noch näher erläutert wird.

In der Unterdruckkammer 22 erstrecken sich zwei aus einem verformbaren Material ausgebildete Verschlusskörper 24, 24'. Jeder Verschlusskörper 24, 24' ist mit einem Mündungsabschnitt 26 an einer der Saugseite 16 gegenüberliegenden Oberseite 28 des Gehäuses 14 befestigt. Insofern weist die Oberseite 28 einen Befestigungsabschnitt 29 für die Mündungsabschnitte 26 der Verschlusskörper 24 auf. Jeder Verschlusskörper 24, 24' weist eine im dargestellten Beispiel innen liegende Deformationskammer 30, 30' auf, welche mit Druckluft beaufschlagbar ist. Hierzu weist jeder Mündungsabschnitt 26 einen Druckluftzugang 32 auf, über den die jeweilige Deformationskammer 30, 30' mit Druckluft beaufschlagbar ist. Andererseits ist denkbar, dass die Deformationskammer 30, 30' mit einem Unterdruck beaufschlagbar ist, wozu ein entsprechender Unterdruckzugang vorgesehen ist.

Der die Deformationskammer 30 umgebende Bereich des Verschlusskörpers 24 bildet einen Deformationsabschnitt 34. Dieser ist im dargestellten Beispiel faltenbalgartig ausgebildet. Wird die Deformationskammer 30 mit Druckluft beaufschlagt, so bläht sich die Deformationskammer 30 und somit der Deformationsabschnitt 34 ballonartig auf. Diese Verformung führt dazu, dass ein Dichtabschnitt 36 des Verschlusskörpers 24 derart verlagert wird, dass er wenigstens eine Saugöffnung 20 der Saugstelle 18' gegen ein Durchströmen von Luft in die Unterdruckkammer 22 verschließt, wie dies für den rechten Verschlusskörper 24' in Figur 1 dargestellt ist. Insbesondere ist der Dichtabschnitt 36 an der dem Mündungsabschnitt 26 gegenüberliegenden Seite des Verschlusskörpers 24 vorgesehen. Der Dichtabschnitt 26 kann eine Dichtplatte 38 aufweisen, die derart an die Saugseite 16 angepasst ist, dass mehrere Saugöffnungen 20 verschließbar sind.

Insofern kann der verformbar ausgebildete Verschlusskörper 24 durch Beaufschlagung der Deformationskammer 30 mit Druckluft zwischen einer in Figur 1 links dargestellten Durchlasskonfiguration und einer in Figur 1 rechts dargestellten Schließkonfiguration verformt werden. In der Durchlasskonfiguration gibt der Dichtabschnitt 26 Saugöffnungen 20 der Saugstelle 18 bei, so dass Luft in die Unterdruckkammer 22 eingesaugt werden kann. Bei Vorliegen der Schließkonfiguration dichtet der Dichtabschnitt 36 zumindest einige der Saugöffnungen 20 der Saugstelle 18' ab. Wie in Figur 1 skizziert, kann dadurch ein Werkstück 12 zuverlässig gegriffen werden, welches nicht die gesamte Saugseite 16 des Flächensauggreifers 10 überdeckt.

Der Deformationsabschnitt 34 des Verschlusskörpers 24 ist vorzugsweise aus einem elastischen Kunststoff ausgebildet. Dabei ist die Neutralstellung, welche sich ohne Anlegen eines Überdrucks in der Deformationskammer einstellt, vorzugsweise die in Figur 1 links dargestellte Durchlasskonfiguration.

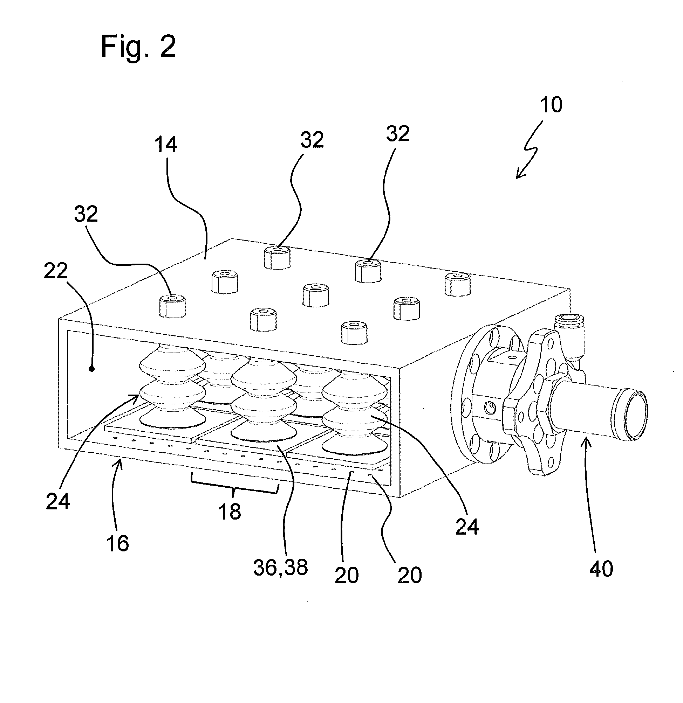

In der Figur 2 ist in schematischer Darstellung eine perspektivische Ansicht des Flächensauggreifers 10 gezeigt, bei dem in der Unterdruckkammer 22 eine Mehrzahl von Verschlusskörpern 24 vorgesehen sind.

Die Saugseite 16 weist eine Vielzahl von regelmäßig angeordneten Saugöffnungen auf, die beispielsweise gleichmäßig voneinander beabstandet sind. Jedem Verschlusskörper 24 ist hierbei eine Saugstelle 18 insofern zugeordnet, dass die Saugstelle 18 jeweils solche Saugöffnungen 20 umfasst, welche bei Vorliegen der Schließkonfiguration des Verschlusskörpers 24 von dessen Dichtabschnitt 36 (bzw. der hieran angeordneten Dichtplatte 38) verschlossen werden.

In der Unterdruckkammer 22 wird ein globaler Unterdruck bereitgestellt, vorzugsweise derart, dass auch bei einigen nicht verschlossenen Saugöffnungen 20 noch ein ausreichender Volumenstrom zur Bereitstellung einer ausreichenden Saugwirkung erzielt werden kann. Dies ermöglicht es, auch teilweise luftdurchlässige Werkstoffe wie Textilien zuverlässig zu halten. Zur Evakuierung der Unterdruckkammer 22 kann das Gehäuse 14 einen Unterdruckversorgungszugang 40 aufweisen. Dieser kann mit einem entsprechenden Unterdruckerzeuger des Flächensauggreifers 10 verbunden sein.

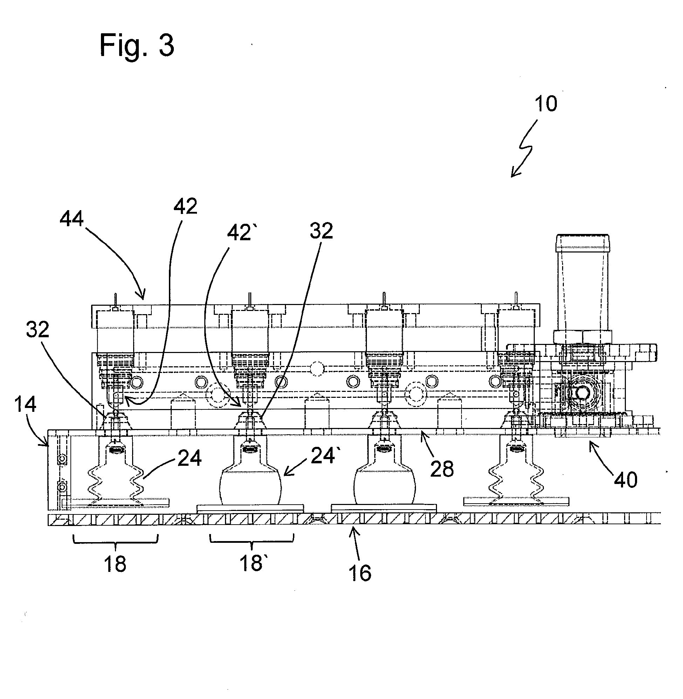

Die Figur 3 zeigt eine weitere Ausbaustufe des Flächensauggreifers 10. Hierbei ist jedem Verschlusskörper 24, 24', ... ein Vorsteuerventil 42, 42', ... derart zugeordnet, dass die Druckluftzufuhr zur jeweiligen Deformationskammer 30, 30', ... steuerbar ist. Im dargestellten Beispiel sind die Vorsteuerventile 42, 42', ... in einer Ventilbaueinheit 44 zusammengefasst, welche mit der Oberseite 28 des Gehäuses 14 der Unterdruckkammer 42 verbunden ist. Selbstverständlich können die Vorsteuerventile 42 auch in einem gemeinsamen Gehäuse 14 mit der Unterdruckkammer 22 integriert sein. Die Vorsteuerventile 42 sind vorzugsweise auf die Druckluftzugänge 32 der Mündungsabschnitte 26 aufgesetzt. Die Vorsteuerventile 42 können beispielsweise als elektrisch ansteuerbare Magnetventile ausgebildet sein, über welche die Druckluftzugänge 32 kontrolliert mit einem Druckluftverteilersystem des Flächensauggreifers 10 verbindbar sind.

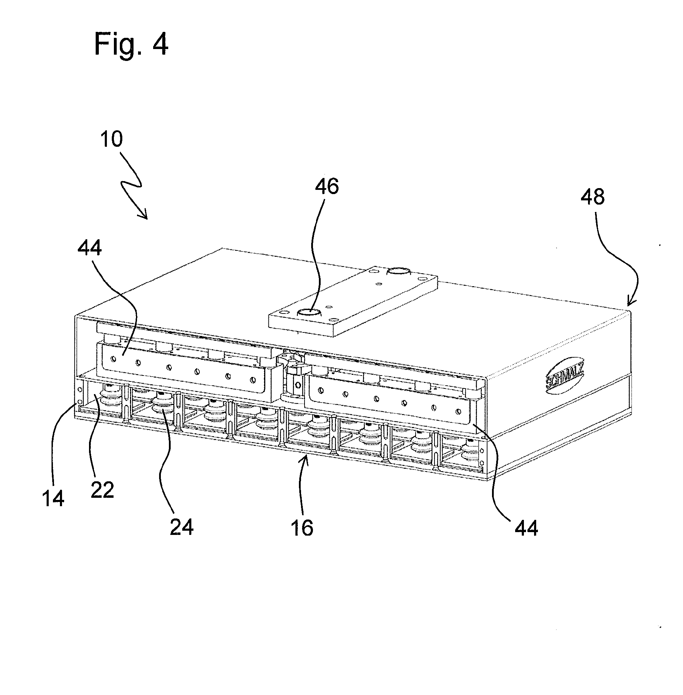

Die Figur 4 zeigt eine Gesamtansicht eines Flächensauggreifers 10, welcher zur Evakuierung der Unterdruckkammer 22 wenigstens einen Unterdruckerzeuger 46 umfasst. Der Unterdruckerzeuger 46 ist im dargestellten Beispiel als druckluftbetriebener Ejektor ausgebildet. Insofern wird hier sowohl die Verformung der Verschlusskörper 24 zwischen Schließkonfiguration und Durchlasskonfiguration, als auch die Evakuierung der Unterdruckkammer 22 von Druckluft betrieben. Der Flächensauggreifer 10 weist hierzu Drucklufthauptzugänge auf, welche einerseits die Unterdruckerzeuger 46 speisen, andererseits mit einem Druckluftverteilersystem (nicht dargestellt) verbunden sind. Die einzelnen Verschlusskörper 24 bzw. die zugeordneten Deformationskammern 30 sind mittels der Vorsteuerventile der Ventilbaueinheiten 44 kontrolliert mit dem Druckluftverteilersystem verbindbar. Im dargestellten Beispiel ist der Flächensauggreifer 10 modular aufgebaut. Das Gehäuse 14 der Unterdruckkammer 22, sowie die an dem Gehäuse 14 der Unterdruckkammer 22 angeordneten Ventilbaueinheiten 44, und die Unterdruckerzeuger 46 sind baugruppenartig aneinander befestigt und können wie in Figur 4 angedeutet, in einem gemeinsamen Greifergehäuse 48 zusammengefasst sein. Ein derartiger modularer Aufbau ermöglicht es, zu Wartungszwecken auf einfache Weise die funktionalen Einheiten des Flächensauggreifers auszuwechseln.

## Patentansprüche

1. Flächensauggreifer (10) zum Ansaugen und Handhaben von Werkstücken (12), mit einem Gehäuse (14) in welchem eine mit Unterdruck beaufschlagbare Unterdruckkammer (22) vorgesehen ist, wobei das Gehäuse (14) eine dem Werkstück (12) zugewandten Saugseite (16) aufweist, an welcher wenigstens eine Saugstelle (18) mit wenigstens einer Saugöffnung (20) vorgesehen ist, **dadurch gekennzeichnet, dass** in der Unterdruckkammer (22) wenigstens ein der Saugstelle (18) zugeordneter, einen Dichtabschnitt (36) aufweisender und verformbar ausgebildeter Verschlusskörper (24) vorgesehen ist, wobei der Verschlusskörper (24) einen Deformationsabschnitt (34) mit einer Deformationskammer (30) aufweist, wobei Verschlusskörper (24) durch Beaufschlagen der Deformationskammer (30) mit Überdruck oder Unterdruck von einer Durchlasskonfiguration in eine Schließkonfiguration derart verformbar ist, dass der Dichtabschnitt (36) in der Schließkonfiguration wenigstens eine Saugöffnung (20) der Saugstelle (18) verschließt und diese in der Durchlasskonfiguration freigibt.

2. Flächensauggreifer (10) nach Anspruch 1, **dadurch gekennzeichnet, dass** der Verschlusskörper (24) derart ausgebildet ist, dass er ohne Beaufschlagung der Deformationskammer (30) mit Überdruck oder bei Beaufschlagung mit Unterdruck die Durchlasskonfiguration einnimmt.

3. Flächensauggreifer (10) nach Anspruch 1 oder 2, **dadurch gekennzeichnet, dass** zumindest der Deformationsabschnitt (34) aus einem elastisch verformbaren Material ausgebildet ist.

4. Flächensauggreifer (10) nach einem der vorherigen Ansprüche, **dadurch gekennzeichnet, dass** der wenigstens eine Verschlusskörper (24) einstückig ausgebildet ist.

5. Flächensauggreifer (10) nach einem der vorherigen Ansprüche, **dadurch gekennzeichnet, dass** an dem Verschlusskörper (24) eine Dichtplatte (38) zum Verschließen wenigstens einer Saugöffnung (20) der jeweiligen Saugstelle (18) vorgesehen ist.

6. Flächensauggreifer (10) nach einem der vorherigen Ansprüche, **dadurch gekennzeichnet, dass** die Saugseite (16) eine Vielzahl von Saugstellen (18) mit jeweils wenigstens einer Saugöffnung (20) und mit jeweils einem zugeordneten Verschlusskörper (24) aufweist.

7. Flächensauggreifer (10) nach einem der vorherigen Ansprüche, **dadurch gekennzeichnet, dass** jede Saugstelle (18) eine Vielzahl von Saugöffnungen (20) aufweist.

8. Flächensauggreifer (10) nach einem der vorherigen Ansprüche, **dadurch gekennzeichnet, dass** die Deformationskammer (30) innenliegend in dem Deformationsabschnitt (34) vorgesehen ist und ballonartig aufblähbar ist.

9. Flächensauggreifer (10) nach einem der vorherigen Ansprüche, **dadurch gekennzeichnet, dass** der Verschlusskörper (24) mit einem Mündungsabschnitt (26) an einem vorzugsweise der Saugseite (16) gegenüberliegenden Befestigungsabschnitt (29) des Gehäuses (14) fixiert ist.

10. Flächensauggreifer (10) nach dem vorherigen Anspruch, **dadurch gekennzeichnet, dass** für den Verschlusskörper (24) ein zugeordnetes Vorsteuerventil (42) zur kontrollierten Beaufschlagung der Deformationskammer (30) mit Überdruck oder Unterdruck vorgesehen ist.
